# EUROPEAN PATENT APPLICATION

(11) **EP 2 233 430 A1**
(43) Date of publication of application: **29.09.2010**
(21) Application number: 09250815.9
(22) Date of filing: 24.03.2009
(51) Int. Cl.: C01B 3/36, C01B 3/50

(54) **Process for generating hydrogen and carbon dioxide**

(71) Applicant: Hydrogen Energy International Limited, Weybridge Surrey KT13 ONY (GB)
(72) Inventor: The designation of the inventor has not yet been filed
(74) Representative: Collins, Frances Mary

(57) **Abstract**

A process for generating hydrogen and carbon dioxide from a hydrocarbon feedstock and sequestering the carbon dioxide and/or using the carbon dioxide in a chemical process comprising the steps of:
(a) introducing (1) a fuel feed stream comprising a hydrocarbon feedstock, and (2) an first oxidant feed stream comprising at least 90 mole % oxygen to a non catalytic partial oxidation reactor unit (POx) for the production of synthesis gas wherein (i) the temperature of the fuel feed stream is in the range 100 to 700°C, and (ii) the molar ratio of oxygen contained in the first oxidant feed stream to carbon (in hydrocarbons) in the fuel feed stream is from 0.5:1 to 1.0:1;
(b) withdrawing a synthesis gas stream comprising hydrogen, carbon dioxide and carbon monoxide from the partial oxidation reactor unit and introducing the synthesis gas stream to a heat exchanger where heat generated in the partial oxidation reactor is used for the generation of steam and/or superheated steam;
(c) withdrawing a cooled synthesis gas stream from the heat exchanger and introducing the cooled synthesis gas stream to a carbon oxides separation facility where it is separated into (1) a carbon oxides stream comprising carbon dioxide and carbon monoxide, and (2) a hydrogen stream comprising hydrogen and optionally nitrogen;
(d) introducing the carbon oxides stream and a second oxidant feed stream comprising at least 90 mole% oxygen (based on the total moles of oxygen and of any nitrogen in the second oxidant feed stream) to an oxycombustion boiler for the production of a carbon dioxide stream and using the heat generated by combustion of the carbon oxides stream in the boiler for the production of steam and/or superheated steam;
(e) exporting the carbon dioxide stream and hydrogen stream from the process; and
(f) sequestering the carbon dioxide stream and/or using the carbon dioxide in a chemical process.

## Description

This invention relates to a process for the production of a synthesis gas from a hydrocarbon feedstock and for separating the synthesis gas into a carbon dioxide product stream that may be used in a chemical process, or may be sequestered or used for enhanced oil recovery before being ultimately sequestered, and a hydrogen fuel stream that may be used as fuel for a power plant thereby generating electricity or as fuel for a low pressure burner of a fired heater, or as fuel for a reformer or boiler or as a refinery feed stream for upgrading of one or more refinery streams or as a hydrogen feed to a chemical process.

It is known to produce electricity in a combined cycle power plant integrated with a reforming plant where a gas turbine is fuelled by hydrogen containing gas. Thus, International Patent Application number WO 00/03126 relates to a process for the production of electric energy, steam, and carbon dioxide in concentrated form from a hydrocarbon feedstock, comprising formation of synthesis gas in an air driven autothermal reactor unit (ATR); heat exchanging the formed synthesis gas and thereby producing steam, treating at least a portion of the synthesis gas in a CO-shift reactor unit and carbon dioxide separator unit for formation of concentrated carbon dioxide and a hydrogen containing gas which at least partly is combusted in a combined cycle gas turbine for the production of electric energy; and where air from said turbine unit is supplied to the ATR unit, that the exhaust from the gas turbine is heat exchanged for production of steam which together with steam generated upstream is utilized in a steam turbine for production of substantially CO₂-free electric energy.

WO 2008/074980 describes an alternative process for generating carbon dioxide in concentrated form and electricity from a hydrocarbon feedstock said process comprising the steps of:
a) introducing an air feed stream comprising air and optionally steam and a fuel feed stream comprising methane and optionally hydrogen and/or steam to an autothermal reactor unit (ATR) for the production of synthesis gas wherein (i) the temperature of the fuel feed stream is in the range 350 to 700°C, and (ii) the molar ratio of oxygen contained in the air feed stream to carbon (in hydrocarbons) in the fuel feed stream is from 0.45:1 to 0.85:1;
b) withdrawing a synthesis gas stream comprising methane, hydrogen, carbon monoxide, carbon dioxide, nitrogen and optionally steam from the ATR and heat exchanging the synthesis gas stream with a water stream for the production of steam and subsequently heat exchanging the synthesis gas stream with at least one process stream selected from the group consisting of a hydrocarbon feedstock, a pre-reformer feed stream, the fuel feed stream, a hydrogen stream, boiler feed water, the air feed stream, and steam for the production of superheated steam;
c) if necessary, introducing steam to the synthesis gas stream before passing at least a portion of the synthesis gas stream to a shift converter unit where the synthesis gas reacts with steam to generate additional carbon dioxide and hydrogen;
d) withdrawing a shift converted gas stream from the shift converter unit and heat exchanging the shift converted gas stream with at least one process stream selected from the group consisting of a hydrocarbon feedstock, a pre-reformer feed stream, the fuel feed stream, a hydrogen stream, boiler feed water, the air feed stream, water for the production of steam, and steam for the production of superheated steam;
e) passing the shift converted gas stream to a carbon dioxide separation unit for the separation of a concentrated carbon dioxide stream from a hydrogen stream comprising hydrogen and nitrogen;
f) combusting at least part of the hydrogen stream in a gas turbine wherein the gas turbine drives an electric generator thereby producing electricity and wherein combustion of the hydrogen stream generates an exhaust gas.

The ATR-based processes described above typically require a sequence of five distinct reaction steps: (1) hydrodesulphurisation of natural gas, (2) absorption of H₂S on zinc oxide, (3) pre-reforming of the natural gas in a pre-reformer unit, (4) reforming of the natural gas in the ATR thereby generating synthesis gas, (5) treatment of the synthesis gas in a shift converter unit to convert carbon monoxide to carbon dioxide according to the water gas shift reaction (for example, in a shift reactor and a low temperature shift reactor). Moreover the requirement for a steam feed stream for the ATR results in rejection of heat from the ATR-based process at low temperatures of about 120 to 140°C, for which there is usually no constructive use apart from re-boiling of solvents that are employed for the absorption of CO₂ in a CO₂ absorption unit that comprises an absorber and desorber.

The objective of the present invention is to provide a simplified process for the production of synthesis gas that eliminates the need for a shift converter unit. A further objective of the present invention is to provide a simplified process for the separation of carbon dioxide from the synthesis gas such that the duty for carbon dioxide removal plant is reduced. The process of the present invention therefore provides good economies of scale for separation of a synthesis gas stream into a CO₂ stream and a hydrogen stream where the hydrogen stream is used for production of electricity in a power plant and the CO₂ stream is either used for a chemical process or is sequestered or is used for enhanced oil recovery before being ultimately sequestered.

Accordingly, the present invention relates to a process for generating hydrogen and carbon dioxide from a hydrocarbon feedstock and sequestering the carbon dioxide and/or using the carbon dioxide for a chemical process comprising the steps of:
a) introducing (1) a fuel feed stream comprising a hydrocarbon feedstock, and (2) a first oxidant feed stream comprising at least 90 mole % oxygen (based on the total moles of oxygen and of any nitrogen in the first oxidant stream) to a non catalytic partial oxidation reactor unit (POx) for the production of synthesis gas wherein (i) the temperature of the fuel feed stream is in the range 100 to 700°C, and (ii) the molar ratio of oxygen contained in the first oxidant feed stream to carbon (in hydrocarbons) in the fuel feed stream is from 0.5:1 to 1.0:1;
b) withdrawing a synthesis gas stream comprising hydrogen, carbon dioxide and carbon monoxide from the partial oxidation reactor unit and introducing the synthesis gas stream to a heat exchanger where heat generated in the partial oxidation reactor is used for the generation of steam and/or superheated steam;
c) withdrawing a cooled synthesis gas stream from the heat exchanger and introducing the cooled synthesis gas stream to a carbon oxides separation facility where it is separated into (1) a carbon oxides stream comprising carbon dioxide and carbon monoxide, and (2) a hydrogen stream comprising hydrogen and optionally nitrogen;
d) introducing the carbon oxides stream and a second oxidant feed stream comprising at least 90 mole% oxygen (based on the total moles of oxygen and of any nitrogen in the second oxidant feed stream) to an oxycombustion boiler for the production of a carbon dioxide stream and using the heat generated by combustion of the carbon oxides stream in the boiler for the production of steam and/or superheated steam;
e) exporting the carbon dioxide stream and hydrogen stream from the process; and
f) sequestering the carbon dioxide stream and/or using the carbon dioxide in a chemical process.

The term "sequestering the carbon dioxide stream" as used herein includes using the carbon dioxide stream for enhanced oil recovery before ultimately sequestering the carbon dioxide.

Preferably, the hydrogen stream that is exported from the process of the present invention is used as fuel for the combustor of a gas turbine of a power plant wherein the gas turbine drives an electric generator thereby generating electricity; and, optionally, as fuel for a post-firing burner of a heat recovery unit that recovers heat from a post-fired exhaust from the gas turbine. However, it is also envisaged that at least a portion of the hydrogen stream that is exported from the process may be used as fuel for a low pressure burner of a fired heater, or as fuel for a reformer or boiler or as a refinery feed stream for upgrading of one or more refinery streams or as a hydrogen feed to a chemical process.

An advantage of using the hydrogen stream as fuel for both the combustor of the gas turbine, preferably a plurality of combustors of a plurality of gas turbines, and as fuel for the post-firing burner of a heat recovery unit is that the fuel requirement for the combustor(s) of the gas turbine(s) varies throughout the day, for example, in response to changes in temperature. Accordingly, when there is a decrease in fuel demand for the combustor(s) of the gas turbine(s), excess fuel can be diverted to the post-firing burner of the heat recovery unit such that the POx reactor can continue to produce the hydrogen stream at a substantially constant rate.

Where the hydrogen stream is used as a fuel in a power plant (as fuel for the combustor of a gas turbine and optionally as fuel for a post-firing burner of a heat recovery unit), it is preferred that the hydrogen stream is diluted with nitrogen and/or steam in order to minimize NOx emissions from the power plant. However, where the oxidant feed stream to the POx reactor unit comprises nitrogen, the amount of diluent that is added to the hydrogen stream may be reduced.

Optionally, any steam or superheated steam generated in steps (b) and/or (d) may be supplied to a steam turbine that drives an electric generator thereby producing electricity. The steam generated in steps (b) and/or (d) may also be used to drive mechanical process equipment such as pumps and/or compressors, to heat the fuel stream that is fed to the POx reactor unit, to provide energy for the carbon dioxide separation unit, to provide energy to dehydrate the carbon dioxide product stream, or the steam may be exported to an external process duty. These uses may be as an alternative or, in addition, to using the steam to generate electricity.

The molar ratio of oxygen contained in the first oxidant feed stream to carbon (in hydrocarbon) in the fuel stream that is fed to the POx reactor unit is from 0.5:1 to 1.0: 1, preferably 0.6:1 to 0.8:1. The oxygen to carbon molar ratio refers to oxygen (O₂) contained in the first oxygen feed stream and to the carbon in the hydrocarbons of the fuel feed stream (excluding carbon in any carbon dioxide and/or carbon monoxide that is present in the fuel feed stream).

Optionally, the fuel feed stream that is introduced to the POx reactor unit comprises steam. Typically, the molar ratio of steam to carbon (in hydrocarbons) in the fuel feed stream that is introduced to the POx reactor unit is up to 1.0:1, preferably, up to 0.5:1. The steam to carbon molar ratio is based on the carbon in the hydrocarbons of the fuel feed stream excluding carbon in any carbon dioxide and/or carbon monoxide that is present in the fuel feed stream.

Optionally, the fuel feed stream that is introduced to the POx reactor unit comprises hydrogen. The presence of hydrogen in the fuel feed stream is advantageous owing to the hydrogen facilitating ignition of the fuel feed stream with the oxygen contained in the first oxidant feed stream. Typically, the amount of hydrogen in the fuel feed stream is within the range of 0.1 to 20 mole %, preferably, 2 to 20 mole %. A portion of the hydrogen stream that is introduced into the fuel feed stream may be recycled from the carbon oxides separation facility.

It is envisaged that the first oxidant feed stream and fuel feed stream will be introduced separately to the POx reactor unit. The relative rates at which the first oxidant feed stream and fuel feed stream are introduced to the POx reactor unit are such that the molar ratio of oxygen (O₂) contained in the first oxidant feed stream to carbon (in hydrocarbons) in the fuel feed stream is in the range of 0.5:1 to 1.0:1, preferably 0.6:1 to 0.8:1.

The fuel feed stream is introduced to the POx at a temperature in the range of 100 to 700°C, preferably 200 to 500°C, in particular, 200 to 400°C. The fuel feed stream is preferably heated to the desired temperature by heat exchange of the fuel feed stream against the synthesis gas stream exiting step (b). However, where, the fuel feed stream is introduced to the POx reactor unit at a temperature above 600°C, it may be preferred to boost the temperature of the fuel feed stream using an external heater.

Preferably, the first oxidant feed stream is introduced to the POx reactor unit at a temperature within the range 100°C to 500°C, typically, at a temperature in the range of 100 to 400°C, in particular 150 to 300°C.

Preferably, the POx reactor unit is operated at a sufficiently high pressure that the hydrogen stream is exported from the process at above the desired inlet pressure for the combustor(s) of the gas turbine(s) of power plant. Thus, the fuel feed stream and the first oxidant stream are typically introduced to the POx reactor unit at a pressure in the range of 30 to 100 bar gauge, preferably, 45 to 70 bar gauge.

The hydrocarbon feedstock that is used to generate the fuel feed stream may be selected from the group consisting of natural gas, liquefied petroleum gas (LPG) and various petroleum distillates (for example, naphtha), preferably, natural gas.

The partial oxidation (POx) reactor unit is driven by oxygen. The oxidant feed stream (first oxidant feed stream) that is supplied to the POx reactor unit may be substantially pure or may be oxygen of industrial impurity, Typically, the first oxidant feed stream has an oxygen content of at least 90 mole %, for example, 90 to 99.5 mole %, in particular, 95 to 99 mole % (on a dry basis), the remainder of the first oxidant feed stream predominantly comprising nitrogen. Suitably, the first oxidant feed stream may be provided by evaporation of oxygen at high pressure within a conventional air separation plant or by compression of gaseous oxygen provided at lower pressure from an air separation plant. By "high pressure" is meant that the oxygen is evaporated at a sufficiently high pressure that it may be used as feed to the POx reactor unit without additional compression (for example, a pressure in the range of 30 to 100 bar gauge, preferably, 45 to 70 bar gauge). By "low pressure" is meant a pressure of, for example, less than 2 bar gauge.

Optionally, steam may be added to the first oxidant feed stream in an amount of typically up to 20 mole % based on the total moles of oxygen, steam and any nitrogen in the wet first oxidant feed stream. Alternatively, steam may be added to the fuel feed stream to the POx reactor unit in an amount in the range of 0.1 to 0.5 mole %. Steam is added to the oxidant feed stream or the fuel feed stream in order to suppress soot formation in the POx reactor unit. It is envisaged that steam may be added to both the oxidant feed stream and to the fuel feed stream with the amount of steam added to the two streams being selected so as to achieve a concentration of steam in the POx reactor that is effective in suppressing soot formation.

A partial oxidation (POx) reaction occurs when a sub-stoichiometric fuel and oxygen mixture is partially combusted in a reformer thereby creating a synthesis gas stream. Thermal partial oxidation (in the absence of a catalyst) proceeds at a temperature of around 1200°C and above.

The reactions in the POx reactor unit result in a significant temperature rise across the reactor. Typically, the synthesis gas stream that exits the POx reactor unit is at a temperature in the range 1200 to 1400°C, for example, approximately 1300°C. Preferably, the synthesis gas is cooled by heat exchange with a high pressure water stream in a waste heat boiler thereby generating high pressure (HP) steam. Alternatively or additionally, the synthesis gas may be cooled against steam in a heat exchanger thereby generating superheated steam. The synthesis gas stream is preferably further cooled against the hydrocarbon feedstock in a further heat exchanger (POx feed heater). The synthesis gas stream is then preferably subjected to further cooling by heat exchange with a high pressure water stream to generate additional HP steam in a further heat exchanger, typically a waste heat boiler. Thus, there may be two waste heat boilers associated with the POx reactor unit. Preferably, the HP steam is generated at a pressure in the range of 35 to 200 barg, preferably 50 to 150 barg. Typically, the HP steam is saturated HP steam.

The synthesis gas stream that exits the POx reactor unit comprises primarily hydrogen, carbon dioxide and carbon monoxide. Where the first oxidant feed stream or the fuel feed stream to the POx reactor unit comprises nitrogen, the synthesis gas stream that exits the POx reactor unit will additionally comprise nitrogen. Generally, the synthesis gas stream that exits the POx reactor unit will additionally comprise steam that arises from the steam that is added to the first oxidant feed stream and/or the fuel feed stream and/or steam that is generated within the POx reactor unit as a result of reaction between the fuel feed stream and oxygen. Typically, the synthesis gas stream is then cooled against a process stream such that an aqueous phase (condensate) condenses out of the cooled synthesis gas stream. For example, the synthesis gas stream may be cooled against the hydrocarbon feedstock, the fuel feed stream, and the hydrogen product stream. Typically, the condensate is separated from the cooled synthesis gas stream in a condensate drum. The synthesis gas stream may then be further cooled against, for example, cooling water, cooling air or a solvent employed in the desorber of a carbon dioxide separation unit, such that further condensate condenses out of the synthesis gas stream and is removed in a further condensate drum. After cooling and removal of condensate, the synthesis gas is passed to a carbon oxides separation facility where it is separated into a hydrogen stream comprising substantially all of the hydrogen contained in the synthesis gas and a carbon oxides stream comprising CO and CO₂. If nitrogen is present in the synthesis gas stream (derived from the first oxidant feed stream and/or from the fuel feed stream), the hydrogen stream will additionally comprise nitrogen.

It is envisaged that the carbon oxides separation facility may comprise a carbon dioxide separation unit and a cryogenic unit. The carbon dioxide separation unit may comprise an absorber and desorber that employ a physical or chemical absorption solvent for removal of substantially all of the carbon dioxide contained in the synthesis gas thereby generating a CO₂-rich stream. The residual gas stream which comprises predominantly hydrogen, CO and minor amounts of CO₂ and methane is then passed to the cryogenic separation unit where a hydrogen stream is separated from a CO-rich stream. The CO₂-rich stream from the carbon dioxide separation unit and the CO-rich stream from the cryogenic separation unit are then preferably combined thereby forming the carbon oxides stream. Suitable cryogenic separation units for separating hydrogen and CO are well known to the person skilled in the art and typically comprise a drier, a cryogenic cooler and a separator vessel. In the cryogenic separator unit, the residual gas stream from the carbon dioxide separator unit is first dried over an adsorbent bed such as molecular sieve bed to substantially to remove residual water vapour, CO₂, traces of sulphur compounds or any other material that would solidify at the low temperatures of the cryogenic separation unit. The dried residual gas stream is then cooled to a temperature of about -180°C at which temperature most of the CO condenses out of the residual gas stream as a liquid that has a small amount of hydrogen dissolved in it. The resulting two phase mixture (comprising a liquid CO-rich phase and a gaseous hydrogen-rich phase) is then separated in, for example, a flash vessel. The gaseous hydrogen-rich phase comprises hydrogen and optionally nitrogen and is reheated to ambient temperature thereby forming the hydrogen stream. The liquid CO-rich phase is flashed to near-atmospheric pressure through a valve and is then evaporated and re-heated to ambient temperature. The person skilled in the art will understand that flashing of the liquid CO-rich phase through the valve results in cooling of the liquid phase. Typically, the cooled CO rich liquid phase may be evaporated and reheated to ambient temperature against the dried residual gas stream thereby providing part of the cooling duty for the dried residual gas stream.

Alternatively, the carbon oxides separation facility may be a pressure swing adsorption (PSA) unit wherein substantially all the hydrogen contained in the synthesis gas is separated from a residual gas which predominantly comprises CO and CO₂. Thus, a hydrogen stream and a carbon oxides stream are withdrawn from the PSA unit. The person skilled in the art will understand that a PSA unit operates at near-ambient temperatures and employs an adsorptive material (for example, a zeolite) as a molecular sieve, such that hydrogen is absorbed from the synthesis gas at high pressure. The process then swings to low pressure to desorb the adsorbent material.

The carbon oxides stream is then passed to an oxycombustion boiler where it is combusted with a second oxidant feed stream thereby forming a carbon dioxide product stream. Steam (for example, saturated steam or more typically superheated steam) is generated in the oxycombustion boiler.

Typically, the oxycombustion boiler is a fired boiler comprising a flame burner and at least one heating coil, preferably, a plurality of heating coils, through which water is passed for the generation of saturated steam and/or steam for the generation of superheated steam and/or boiler feed water for the generation of heat boiler feed water. The person skilled in the art will understand that different streams may be passed through different heating coils. The carbon oxides stream is combusted with the second oxidant stream in the flame burner. Preferably, a portion of the carbon dioxide stream that is produced in step (d) is recycled to the burner in order to dilute the second oxidant stream thereby moderating the flame temperature in the boiler. During start-up of the oxycombustion boiler, air is initially used as oxidant and the carbon dioxide stream is initially discharged to atmosphere as it will contain unacceptable levels of nitrogen for sequestration. Oxygen is then progressively blended into the air (replacing air) until the oxygen concentration of the second oxidant feed (based on the total moles of oxygen and nitrogen in the second oxidant feed stream and excluding any carbon dioxide diluent) is at least 90 mole %. As the concentration of oxygen rises, the amount of carbon dioxide that is recycled to the second oxidant feed stream is increased until the desired dilution level is attained. The concentration of oxygen in the second oxidant feed stream (prior to dilution with carbon dioxide) is preferably at least 95 mole%, more preferably, at least 98 mol%, for example, in the range of 98.5 to 99.5 mole % in order to minimise the nitrogen content of the carbon dioxide stream that is exported from the process and sequestrated. Typically, the amount of carbon dioxide that is recycled to the boiler is sufficient to dilute the oxygen content of the second oxidant feed stream to a value in the range of 15 to 40 mole %.

Heat is recovered from the carbon dioxide product stream within the oxycombustion boiler by heat exchange against boiler feed water and/or against the carbon oxides stream and/or against the recycled carbon dioxide stream. The carbon dioxide stream that exits the oxycombustion boiler is then further cooled (by indirect heat exchange with cooling water or cooling air or by direct contact with cooling water) in order to condense water from the carbon dioxide stream and the resulting condensate is then collected in a knock-out drum. The CO₂ product stream is then compressed to an intermediate pressure of, for example, 30 to 50 bar gauge, and the compressed CO₂ product stream is dried, for example, by being passed through at least one dehydration bed (formed from, for example, a molecular sieve or silica gel) thereby reducing its water content such that the dried CO₂ product stream has a dew point of approximately -10°C at the transportation pressure of the CO₂ product stream. The CO₂ product stream is then compressed to the transportation pressure which is selected such that the CO₂ product stream is in a liquid or supercritical state, for example, a pressure in the range of 75 to 250 bar gauge.

Typically, the CO₂ product stream is then delivered to a pipeline for transfer to a reception facility of an oil or gas field where the concentrated CO₂ stream is used as an injection fluid in the oil or gas field. If necessary, the concentrated CO₂ stream is pumped to above the pressure of a hydrocarbon reservoir of the oil or gas field before being injected into the hydrocarbon reservoir. The injected CO₂ displaces the hydrocarbons contained in the porous and permeable reservoir rock towards a production well for enhanced recovery of hydrocarbons therefrom. If any carbon dioxide is produced from the production well together with the hydrocarbons, the carbon dioxide may be separated from the hydrocarbons for re-injection into the hydrocarbon reservoir. It is also envisaged that the concentrated CO₂ stream may be sequestered by being injected into a depleted oil or gas reservoir where the production wells have been shut-in or into an aquifer or into a cavern for storage therein. It is envisaged that the carbon dioxide may be stored indefinitely in the reservoir, aquifer or cavern.

The CO₂ product stream that is sequestered preferably comprises at least 98 mole % CO₂ on a dry basis, the remainder being mostly hydrogen.

The hydrogen content of hydrogen stream that is separated from the synthesis gas is typically at least 90 mole %, preferably, at least 95 mole %. Where nitrogen is present in the first oxidant feed stream, the remainder of the hydrogen stream is predominantly nitrogen. Trace amounts of carbon oxides (CO and CO₂) and methane may also be present in the hydrogen stream, for example, less than 500 ppm on a molar basis.

Where the hydrogen stream is to be used as fuel for the combustor of a gas turbine of a power plant, nitrogen, derived from the air separation plant which supplies oxygen to the POx reactor unit, may be added to the hydrogen stream to achieve a nitrogen content typically in excess of 40 % by volume in order to limit the NOₓ content of the exhaust from the gas turbine. This facility for introducing nitrogen from the air separation plant is advantageous in that the nitrogen content of the fuel gas for the combustor of the gas turbine may be varied independently of the nitrogen content of the oxidant stream that is fed to the POx reactor unit. Addition of nitrogen to limit NOₓ formation in the gas turbine is advantageous as it allows for the elimination of water or steam as an additional diluent for the hydrogen stream. However, the present invention does not exclude the addition of steam or water (by saturation) to the hydrogen stream. Suitably, the level of NOₓ in the exhaust gas from the gas turbine of the power plant is less than 60 ppm, preferably, less than 25 ppm. Preferably, the fuel stream for the combustor of the gas turbine contains 35 to 65% by volume hydrogen, more preferably, 45 to 60% by volume hydrogen, for example, 48 to 52% by volume of hydrogen. It is envisaged that the fuel stream may comprise trace amounts of carbon oxides (CO and CO₂) and of methane.

Optionally, the exhaust gas from the gas turbine may be heat exchanged with steam produced in the process of the present invention for the production of superheated steam. The superheated steam so generated may then be passed to a steam turbine of the power plant that drives an electric generator thereby producing further electricity. Also, the exhaust gas may be heat exchanged with the first oxidant feed stream that is introduced to the POx reactor unit. Preferably, the exhaust gas is heat exchanged with at least one additional process stream produced in the process of the present invention in order to extract the maximum amount of heat from the exhaust gas. For example, the exhaust gas may be heat exchanged with the boiler feed water to the waste heat boiler(s) of the POx reactor unit. Suitably, the boiler feed water to the waste heat boiler(s) is heated to a temperature of at least 250°C, for example, a temperature of 300°C, by heat exchange with the exhaust gas. However, the temperature of the boiler feed water should be maintained at below its saturation temperature for the chosen feed pressure. Generally, the boiler feed water is at relatively high pressure, for example, about 140 bar gauge. For safety reasons, it is preferred not to heat exchange the exhaust gas with either the hydrocarbon feedstock or the fuel feed stream.

Suitably, the various process streams are heat exchanged with the exhaust gas in a heat recovery unit that is arranged downstream of the gas turbine. Optionally, the temperature of the exhaust gas of the gas turbine is increased by providing the heat recovery unit with a post-firing system, for example, a post-firing burner. Suitably, the post-firing burner is fed with a portion of the hydrogen stream that is exported from the process in step (e) and the hydrogen is combusted in the burner using residual oxygen contained in the exhaust gas. Suitably, the exhaust gas is raised in temperature in the post-firing system to a temperature in the range of 500 to 800°C.

Typically, the heat recovery unit is a heat recovery and steam generator unit (HRSG) that generates and superheats additional steam for use in the steam turbine and elsewhere in this optional integrated process. Thus, in addition to superheating steam generated in step (b) and/or any steam generated in step (d), and to heating any process streams such as the first oxidant feed stream, the second oxidant feed stream, and the high pressure water feed to the waste heat boiler(s) of the POx reactor, the HRSG is capable of generating high pressure (HP) steam, medium pressure (MP) steam and low pressure (LP) steam and of superheating these steam streams. The HRSG may also be capable of reheating MP steam that is produced as an exhaust stream from the high pressure stage of a multistage steam turbine.

The HRSG is provided with a plurality of heating coils through which the various process streams are passed in heat exchange relationship with the exhaust gas (optionally, a post-fired exhaust gas). The person skilled in the art will understand that the exhaust gas will be progressively cooled as it is heat exchanged with the various process streams. The cooled exhaust gas is discharged from the HRSG to the atmosphere through a stack. Preferably, the stack is provided with a continuous emission monitoring system for monitoring, for example, the NOₓ content of the cooled exhaust gas.

Where the carbon oxides separation facility of the process of the present invention comprises a CO₂ separation unit comprising a CO₂ absorber and CO₂ desorber, a minor portion of the LP steam generated in the HRSG may be used as a re-boiling steam to strip CO₂ out of the solvent that is used as absorbent in the CO₂ desorber. However, a major portion of the LP steam is superheated in the HRSG and is delivered to the low pressure stage (final stage) of the steam turbine.

Although, as described above, the process of the present invention may be integrated with the HRSG of the power plant, it is also envisaged that the process of the present invention may be operated without integrating the process with the HRSG of the power plant. Accordingly, the hydrogen stream may be passed as fuel to the combustor of the gas turbine of a separate (non-integrated) power plant.

In a further aspect of the present invention there is provided a system for generating hydrogen and carbon dioxide from a hydrocarbon feedstock and for sequestering the carbon dioxide comprising:
(a) a non-catalytic partial oxidation (POx) reactor unit for generating synthesis gas from the hydrocarbon feedstock and a first oxidant feed stream comprising at least 90 mole % oxygen;
(b) at least one waste heat boiler for recovering heat from the synthesis gas thereby generating saturated steam and/or superheated steam and cooled synthesis gas;
(c) a carbon oxides separation facility for separating the cooled synthesis gas into (1) a carbon oxides stream comprising carbon dioxide and carbon monoxide, and (2) a hydrogen stream comprising hydrogen;
(d) a power plant that employs the hydrogen stream that exits the carbon oxides separation facility as fuel for the combustor of a gas turbine that drives an electric generator and optionally as fuel for a post-firing burner of a heat recovery unit wherein saturated steam and/or superheated steam are generated in the heat recovery unit by heat exchange of water and/or steam with post-fired gas turbine exhaust gas;
(e) an oxycombustion boiler for (1)combusting the carbon oxides stream with a second oxidant feed stream thereby generating a CO₂ stream, and (2) for recovering heat from the combustion products thereby generating steam and/or superheated steam;
(f) at least one compressor for compressing the CO2 stream that exits the oxycombustion boiler thereby converting the CO₂ into a liquid or supercritical state;
(g) a pipeline for delivering the liquid or supercritical CO₂ stream to an injection facility; and
(h) a hydrocarbon reservoir, an aquifer or cavern into which the CO₂ stream is injected by the injection facility for sequestration therein.

Preferably, the system additionally comprises a recycle line for recycling a portion of the hydrogen stream from the carbon oxides separation facility to a flow line that is used for introducing the hydrocarbon feedstock to the POx reactor unit. Preferably, the system is also provided with a recycle line for recycling carbon dioxide from the oxycombustion boiler to a flowline that is used for introducing the second oxidant feed stream to the oxycombustion boiler.

Preferably, the system additionally comprises at least one steam turbine for generating additional electricity from steam generated in the waste heat boiler and/or in the heat recovery unit.

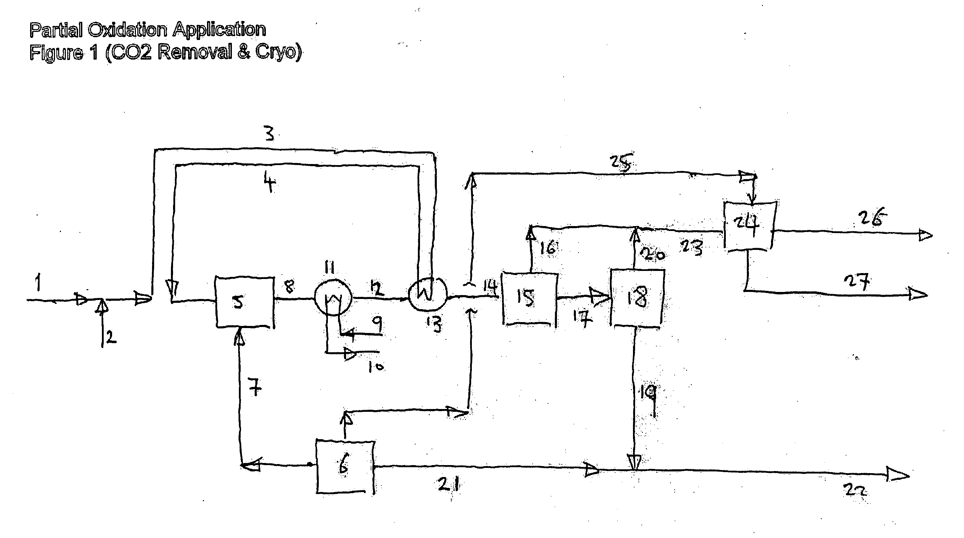

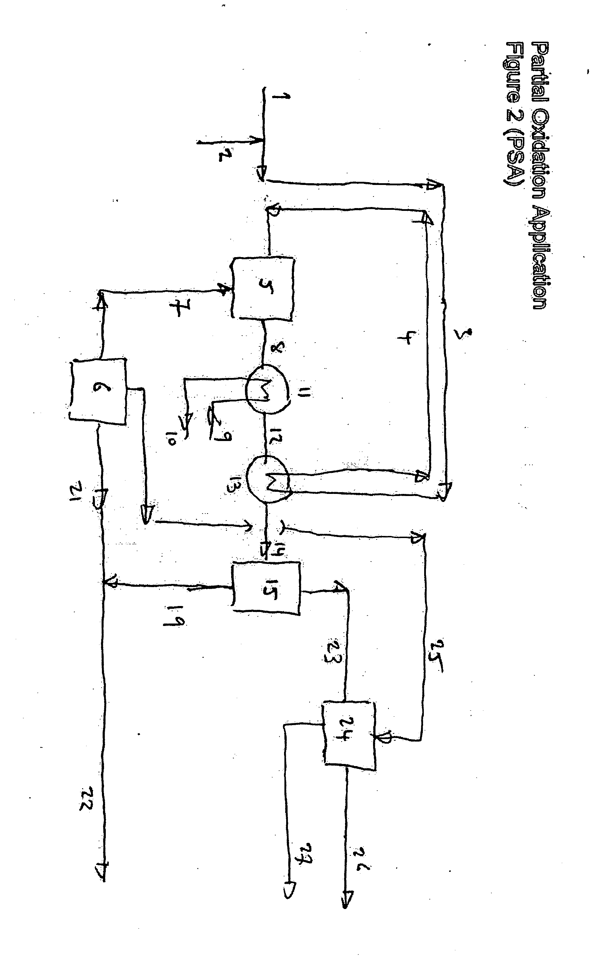

The invention will be further described with reference to Figures 1 and 2.
Figure 1 illustrates a process scheme for the production of the carbon dioxide product stream and a hydrogen fuel stream according to the process of the present invention.
Figure 2 illustrates a modification of the process scheme of Figure 1.

Throughout the following description, examples of temperatures and pressures are given at various stages of a process carried out in accordance with the present invention. However, it should be recognized that these temperatures and pressures are only illustrative of the anticipated conditions within the plant and actual values may vary for any particular process without departing from the present invention.

In Figure 1, steam is introduced into a pressurized natural gas feedstock 1 at a pressure of typically 35 to 70 bar gauge via line 2 thereby generating a fuel feed stream 3. Fuel feed stream 3 is then heated to a temperature of 380°C by heat exchange against synthesis gas stream 12 in heat exchanger 13 (described below) thereby generating heated fuel feed stream 4. The heated fuel feed stream 4 is then introduced to the POx reactor unit 5. A first oxidant feed stream 7 is produced in an air separation unit 6 and is fed to the POx reactor unit 5 to initiate the reforming of the fuel to synthesis gas (a mixture of essentially hydrogen, carbon monoxide, carbon dioxide and steam).

The feed rates of the fuel feed stream and the first oxidant feed stream to the POx reactor unit 5 are controlled such that the molar ratio of oxygen (O₂) contained in the first oxidant feed stream to carbon (in hydrocarbons) in the fuel feed stream is about 0.8:1 to 1.00:1.

A synthesis gas stream 8 exits the POx reactor unit 5 and is cooled in a waste heat boiler (steam generator) 9 by heat exchange with a boiler feed water stream 10 thereby generating high pressure steam 10 which may be used for driving compressors or pumps may be used in the process or for driving a steam turbine of an electrical generator or which may be exported from the process.

A cooled synthesis gas stream 12 exits the waste heat boiler and at least a portion of the remaining thermal energy in the cooled synthesis gas stream is used to pre-heat the fuel feed stream 3 in heat exchanger 13 thereby further cooling the synthesis gas. The synthesis gas stream 14 that exits the heat exchanger 13 is then further cooled (typically against boiler feed water, deaerator feed water, solvent in a CO₂ desorber, cooling water, or cooling air) and is passed to a condensate drum (not shown) where condensate (predominantly water) separates from the cooled synthesis gas stream 14. A deaerator is well known to the person skilled in the art and is a device that is used for heating water that is destined to be feed water for steam production such that dissolved oxygen and other gases are expelled from the feed water. Typically, the water is heated in the deaerator either by indirect heat exchange with a hotter fluid or by direct injection of steam.

The synthesis gas stream that is withdrawn from the condensate drum is then passed to a CO₂ removal unit 15 which separates the synthesis gas stream into a carbon dioxide rich stream 16 and a hydrogen rich stream 17. Typically, the CO₂ removal unit 15 comprises a CO₂ absorber and desorber.

The hydrogen rich stream 17 from the CO₂ removal unit 15 is passed to a cryogenic separator unit 18 where hydrogen is separated from the hydrogen rich stream (as described above) thereby forming hydrogen stream 19 and a residual gas stream 20 comprising predominantly CO with minor amounts of methane and nitrogen (CO rich stream). The CO rich stream 20 from the cryogenic separator unit is then combined with CO₂ rich stream 16 from the CO₂ removal unit to form carbon oxides stream 23. Hydrogen stream 19 is mixed with at least a portion of nitrogen stream 21 produced in air separation unit 6 to form fuel stream 22 which is typically passed as fuel gas to the combustor of a gas turbine of an adjacent power generation facility thereby producing electricity. Dilution of the hydrogen stream with nitrogen minimises NOₓ emissions from the gas turbine.

The carbon oxides stream 23 that is derived from CO₂ rich streams 16 and CO rich stream 20 is passed to oxycombustion boiler 24 where it is combusted with a second oxidant feed stream 25 derived from the air separation unit 6 thereby generating CO₂ product stream 26. Typically the combustion products formed by combustion of the carbon oxides stream in the burners of the oxycombustion boiler are cooled in the combustion space of the boiler c over conventional steam superheater, water evaporator or boiler feed water surfaces, as in a conventional boiler. Thus, steam, water or boiler feed water are typically passed through a cooling coil of the boiler and are heated by the combustion products. The CO₂ product stream 26 is compressed to the desired CO₂ delivery pressure and is then dried before being sent for sequestration. Typically, drying of the CO₂ product stream occurs at an intermediate pressure of, for example, 30 to 50 bar gauge.

The steam generated in the oxycombustion boiler is exported as stream 27 typically for use in a steam turbine of an adjacent power generation facility thereby generating additional electricity.

Figure 2 shows a modification of the process scheme of Figure 1 in which hydrogen is substantially removed from stream 14 in a pressure swing adsorption (PSA) unit 15 as stream 19 containing over 90 mole % hydrogen. The remaining gas which predominantly comprises carbon monoxide and carbon dioxide leaves the PSA unit 15 as carbon oxides stream 23.

## Claims

1. A process for generating hydrogen and carbon dioxide from a hydrocarbon feedstock and sequestering the carbon dioxide and/or using the carbon dioxide in a chemical process comprising the steps of:
a) introducing (1) a fuel feed stream comprising a hydrocarbon feedstock, and (2) a first oxidant feed stream comprising at least 90 mole % oxygen (based on the total moles of oxygen and of any nitrogen in the first oxidant stream) to a non catalytic partial oxidation reactor unit (POx) for the production of synthesis gas wherein (i) the temperature of the fuel feed stream is in the range 100 to 700°C, and (ii) the molar ratio of oxygen contained in the first oxidant feed stream to carbon (in hydrocarbons) in the fuel feed stream is from 0.5:1 to 0.8:1;
b) withdrawing a synthesis gas stream comprising hydrogen, carbon dioxide and carbon monoxide from the partial oxidation reactor unit and introducing the synthesis gas stream to a heat exchanger where heat generated in the partial oxidation reactor is used for the generation of steam and/or superheated steam;
c) withdrawing a cooled synthesis gas stream from the heat exchanger and introducing the cooled synthesis gas stream to a carbon oxides separation facility where it is separated into (1) a carbon oxides stream comprising carbon dioxide and carbon monoxide, and (2) a hydrogen stream comprising hydrogen and optionally nitrogen;
d) introducing the carbon oxides stream and a second oxidant feed stream comprising at least 90 mole % oxygen (based on the total moles of oxygen and of any nitrogen in the second oxidant stream) to an oxycombustion boiler for the production of a carbon dioxide stream and using the heat generated by combustion of the carbon oxides stream in the boiler for the production of steam and/or superheated steam;
e) exporting the carbon dioxide stream and hydrogen stream from the process; and
f) sequestering the carbon dioxide stream and/or using the carbon dioxide stream in a chemical process.

2. A process as claimed in Claim 1 wherein the hydrogen stream that is exported from the process is used as fuel for the combustor of a gas turbine of a power plant thereby producing electricity and, optionally, as fuel for a post-firing burner of a heat recovery unit of the power plant that recovers heat from the exhaust from the gas turbine.

3. A process as claimed in any one of the preceding claims where steam or superheated steam generated in steps (b) and/or (d) is (i) supplied to a steam turbine that drives an electric generator thereby producing electricity.

4. A process as claimed in any one of the preceding claims wherein the fuel feed stream that is introduced to the POx reactor unit comprises steam and the molar ratio of steam to carbon (in hydrocarbons) in the fuel feed stream is up to 1.0:1.

5. A process as claimed in any one of the preceding claims wherein a portion of the hydrogen stream is recycled from the carbon oxides separation facility to the fuel feed stream that is introduced to the POx reactor unit such that the fuel feed stream comprises 2 to 20 mole % hydrogen.

6. A process as claimed in any one of the preceding claims wherein the pressure in the POx reactor unit is in the range of 30 to 100 bar gauge, preferably, 45 to 70 bar gauge.

7. A process as claimed in any one of the preceding claims wherein the cooled synthesis gas stream is separated in step (c) by feeding the cooled synthesis gas stream to a carbon oxides separation facility that comprises a carbon dioxide separation unit arranged upstream of a cryogenic unit and wherein the carbon dioxide separation unit comprises an absorber and desorber that employ a physical or chemical absorption solvent for removal of substantially all of the carbon dioxide contained in the synthesis gas stream such that a CO₂-rich stream and a residual gas stream comprising predominantly hydrogen, CO and minor amounts of CO₂ and methane is withdrawn from the carbon dioxide separation unit and wherein the residual gas stream is passed to the cryogenic unit wherein a CO-rich liquid condenses from a hydrogen stream and the CO-rich liquid is subsequently evaporated and re-heated to form a CO-rich vapour such that a hydrogen stream and a CO-rich vapour stream are withdrawn from the cryogenic unit and wherein the carbon oxides stream is generated by combining the CO₂-rich stream that is withdrawn from the carbon dioxide separation unit and the CO-rich vapour stream that is withdrawn from the cryogenic separation unit.

8. A process as claimed in any one of claims 1 to 6 wherein the cooled synthesis gas stream is separated in step (c) by feeding the synthesis gas stream to a carbon oxides separation facility that comprises a pressure swing adsorption (PSA) unit wherein substantially all the hydrogen contained in the synthesis gas is separated from a residual gas which predominantly comprises CO and CO₂ such that a hydrogen stream and a carbon oxides stream are withdrawn from the PSA unit.

9. A process as claimed in any one of the preceding claims wherein a portion of the carbon dioxide stream that is produced in step (d) is recycled to the second oxidant stream that is introduced to the oxycombustion boiler.

10. A process as claimed in any one of the preceding claims wherein the CO₂ stream is delivered by pipeline to an injection facility of an oil or gas field and the CO₂ stream is sequestered by being injected into a depleted oil or gas reservoir or into an aquifer or into a cavern.

11. A process as claimed in any one of the preceding claims wherein the first oxidant stream and the second oxidant stream that are introduced to the POx reactor unit and the oxycombustion boiler respectively are supplied from an air separation plant and the air separation plant also supplies a nitrogen stream that is separated from the air to the exported hydrogen stream thereby diluting the hydrogen content of the hydrogen stream to a value in the range of 35 to 65% by volume hydrogen, preferably, 45 to 60% by volume hydrogen, for example, 48 to 52% by volume of hydrogen.

12. A process as claimed in any one of claims 2 to 11 wherein the exhaust gas from the gas turbine(s) is raised in temperature in the post-firing burner of the heat recovery unit to a temperature in the range of 500 to 800°C wherein the heat recovery unit is provided with a plurality of heating coils through which process streams are passed in heat exchange relationship with the exhaust gas thereby cooling the exhaust gas and heating the process streams.

13. A system for generating hydrogen and carbon dioxide from a hydrocarbon feedstock and for sequestering the carbon dioxide comprising:
(a) a non-catalytic partial oxidation (POx) reactor unit for generating synthesis gas from the hydrocarbon feedstock and a first oxidant feed stream comprising at least 90 mole % oxygen;
(b) at least one waste heat boiler for recovering heat from the synthesis gas thereby generating saturated steam and/or superheated steam and cooled synthesis gas;
(c) a carbon oxides separation facility for separating the cooled synthesis gas into (1) a carbon oxides stream comprising carbon dioxide and carbon monoxide, and (2) a hydrogen stream comprising hydrogen;
(d) a power plant that employs the hydrogen stream that exits the carbon oxides separation facility as fuel for the combustor of a gas turbine that drives an electric generator and optionally as fuel for a post-firing burner of a heat recovery unit wherein saturated steam and/or superheated steam are generated in the heat recovery unit by heat exchange of water and/or steam with post-fired gas turbine exhaust gas;
(e) an oxycombustion boiler for (1)combusting the carbon oxides stream with a second oxidant feed stream thereby generating a CO₂ stream, and (2) for recovering heat from the combustion products thereby generating steam and/or superheated steam;
(f) at least one compressor for compressing the CO2 stream that exits the oxycombustion boiler thereby converting the CO₂ into a liquid or supercritical state;
(g) a pipeline for delivering the liquid or supercritical CO₂ stream to an injection facility; and
(h) a hydrocarbon reservoir, an aquifer or cavern into which the CO₂ stream is injected by the injection facility for sequestration therein.

14. A system as claimed in Claim 13 wherein the system additionally comprises a recycle line for recycling a portion of the hydrogen stream from the carbon oxides separation facility to a flow line that introduces the hydrocarbon feedstock into the POx reactor unit and a recycle line for recycling carbon dioxide from the oxycombustion boiler to a flowline that introduces the oxidant feed stream to the oxycombustion boiler.

15. A system as claimed in Claim 14 wherein the system additionally comprises a steam turbine for generating additional electricity from steam generated in the waste heat boiler and/or in the heat recovery unit.
